# EUROPEAN PATENT SPECIFICATION

(11) **EP 2 213 688 B1**
(45) Date of publication and mention of the grant of the patent: **22.02.2017**
(21) Application number: 10151992.4
(22) Date of filing: 28.01.2010
(51) Int. Cl.: C08C 19/20, C08C 19/22, C08C 19/25, C08C 19/44, C08L 15/00, C08L 19/00, B60C 1/00

(54) **Tire with a tread of a spatially defined elastomer composition**
Reifen mit einer Lauffläche mit einer räumlich definierten Elastomerzusammensetzung
Pneu avec bande d'une composition d'élastomère définie de manière spatiale

(30) Priority: 29.01.2009 US 148208 P; 16.12.2009 US 639411
(43) Date of publication of application: 04.08.2010
(73) Proprietor: The Goodyear Tire & Rubber Company, Akron, OH 44316-0001 (US)
(72) Inventor: Zhao, Junling, Hudson, OH 44236 (US); Puhala, Aaron Scott, Kent, OH 44240 (US); Verthe, John Joseph Andre, Kent, OH 44240 (US); Zanzig, David John, Uniontown, OH 44685 (US)
(74) Representative: Kutsch, Bernd

(56) References cited:
- EP-A1- 1 818 188
- US-A1- 2008 027 162
- US-A1- 2008 287 601

## Description

### Field of the Invention

The invention relates to a pneumatic rubber tire with an outer, circumferential tread comprising a cis 1,4-polybutadiene-rich rubber composition which contains at least one functionalized styrene/butadiene elastomer in a sense of containing at least one functional group which is reactive with hydroxyl groups (e.g. silanol groups) contained on a silica, preferably a precipitated silica, wherein the cis 1,4-polybutadiene and the functionalized elastomer have spaced apart glass transition temperatures (Tg's).

### Background of the Invention

Pneumatic rubber tires, particularly high performance tires, are typically desired to have treads of a rubber composition which will provide good traction on the road and good resistance to tread wear.

In order to provide good traction for the tread running surface, resistance to treadwear of such tire treads may be somewhat sacrificed.

Rubber compositions intended to provide good traction for a tire tread running surface usually somewhat sacrifices abrasion resistance with an attendant sacrifice in resistance to treadwear. Such traction providing tread rubber typically exhibits a relatively high, single, glass transition temperature (Tg) of above (higher than) -50°C and usually within a range of zero to -50°C.

In contrast, rubber compositions intended to emphasize good resistance to abrasion, with an attendant resistance to treadwear for the tread running surface, typically somewhat sacrifice traction for the tread running surface and typically exhibit a relatively low, single, glass transition temperature (Tg) below (lower than) -50°C.

Therefore, a tread rubber composition exhibiting a balance between traction and resistance to treadwear for a tire tread running surface is difficult to achieve where the rubber composition exhibits only a single Tg.

One proposed solution is to provide the rubber composition with relatively incompatible elastomers in a sense of containing elastomers with spaced apart Tg's so that the resultant rubber composition exhibits two separate Tg's in which a contribution of each elastomer may be separately experienced in a sense that one elastomer may promote traction and another elastomer may promote resistance to tread wear for the tread rubber running surface.

Historically, in US-A- 6,465,560 a tire is proposed with a tread composed of a cis 1,4-polybutadiene-rich and silica-rich rubber composition which contains specified elastomers with spatially defined (spaced apart) glass transition temperatures in conjunction with silica reinforcement and specified carbon black reinforcement.

Historically, in US-A- 5,723,530, a tire is provided with a tread which is composed of four elastomers, of which two of the elastomers have spaced apart (e.g. spatially defined) Tg's, namely,
(A) styrene/butadiene rubber with a Tg in a range of -15°C to -45°C;
(B) medium vinyl polybutadiene rubber with vinyl content of 40 to 65 and a Tg in a range of from about -45°C to -65°C;
(C) cis 1,4-polybutadiene rubber with a Tg in a range of from about -95°C to -105°C; and
(D) cis 1,4-polyisoprene rubber having a Tg in a range of from about -65°C to -70°C;
wherein the Tg of the cis 1,4-polybutadiene rubber is at least 50°C lower than the Tg of the styrene/butadiene rubber.

EP-A-1 818 188 describes a rubber composition for a tire tread comprising at least one conjugated diene-based elastomer, a reinforcing filler and a coupling agent for silica. The elastomer comprises cis-1,4-polybutadiene elastomer and an organic solution polymerization prepared styrene/butadiene elastomer.

US-A-2008/0287601 describes a process for the preparation of a chain end modified polymer by reacting a living anionic elastomeric polymer and a silane-sulfid modifier. It also describes the use of such polymers in tire treads comprising a reinforcing filler based on carbon black and silica and a silane coupling agent. The rubber composition comprises 20 phr of a polybutadiene having a content of cis-1,4 units of 96 percent and a Tg of -105°C and 80 phr of a solution polymerized styrene-butadiene copolymer comprising an alkoxysilane and thiol groups having a bound styrene content of 21 percent and a vinyl content of 63 percent.

US-B2-7,342,070 describes a rubber composition suitable for the preparation of a tire tread comprising a modified styrene-butadiene copolymer comprising alkoxysilane groups and amino groups. The compound may further comprise silica and/or carbon black and a commercial polybutadiene having a level of cis-1,4 of 98 percent and a Tg of -102°C.

For this invention, a tire tread rubber composition is provided which preferably contains carbon black rich reinforcement and a combination of cis 1,4-polybutadiene rubber , functionalized elastomer with spaced apart glass transition temperatures (Tg's) and a cis-1,4 polyisoprene.

In the description of this invention, terms such as "compounded rubber", "rubber compound" and "compound", if used herein, refer to rubber compositions composed of one or more elastomers blended with various ingredients, including curatives such as sulfur and cure accelerators. The terms "elastomer" and "rubber" might be used herein interchangeably.

A reference to glass transition temperature, or Tg, of an elastomer or elastomer composition, where referred to herein, represents an inflection point glass transition temperature(s) of the respective elastomer or elastomer composition in its uncured state or possibly a cured state in a case of an elastomer composition. A Tg can be suitably determined by a differential scanning calorimeter (DSC) at a temperature rate of increase of 10°C per minute.

The existence of more than one glass transition temperature of a cured rubber composition can be determined by dynamic mechanical testing and demonstrated, for example, as a graphical representation, or plot, of tangent delta, or of loss modulus (i.e. E") as a function of temperature. The existence of more than one glass transition temperature for the rubber composition is evident when at least two humps, or peaks, are present in the plot between the temperatures of -90°C and 10°C.

For this invention, the term "functionalized" relates to elastomers which contain at least one functional group which is reactive with hydroxyl groups (e.g. silanol groups) contained on precipitated silica reinforcement for the rubber composition.

### Disclosure and Practice of the Invention

The invention is about a pneumatic rubber tire in accordance with claim 1.

Dependent claims refer to preferred embodiments of the invention.

In accordance with a preferred aspect of the invention, a pneumatic rubber tire is provided having a circumferential rubber tread where said tread is a rubber composition comprising, based on 100 parts by weight of the tread rubber,
(A) conjugated diene-based elastomers comprising
   (1) at least 45 to 85, alternatively at least 50 to 85, and further alternately from 55 to 85, phr of cis 1,4-polybutadiene rubber having a Tg within a range of-95°C to -105°C;
   (2) 15 to 55, alternatively 15 to 50, and further alternately from 45 to 15, phr of at least one elastomeric functionalized styrene/butadiene copolymer rubber (SBR) having a Tg in a range of from -20°C to -40°C;
   wherein the Tg's of said cis 1,4-polybutadiene rubber and said functionalized SBR are spaced apart by at least 50°C,
   wherein said functionalized SBR has a bound styrene content in a range of from 30 to 50 percent (high styrene-containing SBR); and
   wherein said functionalized SBR contains functional group(s) comprising silane/thiol functional groups (silane/thiol functionalized SBR);
(B) 40 to 110, alternatively 50 to 80, phr of reinforcing filler comprising:
   (1) an amorphous rubber reinforcing silica filler, preferably precipitated silica, which contains hydroxyl groups (e.g. silanol groups) on its surface, or
   (2) a combination of said silica and rubber reinforcing carbon black, and
(C) a coupling agent having a moiety (e.g. a siloxy moiety) reactive with hydroxyl groups (e.g.: silanol groups) contained on the surface of said silica and another moiety interactive with at least one of said conjugated diene-based elastomers wherein said rubber composition is exclusive of elastomers having a Tg within a range of from -40°C to -95°C, except that the rubber composition contains up to 20 phr,
   alternatively from 5 to 20 phr of cis 1,4-polyisoprene rubber having a Tg in a range of from-65°C to -70°C.

In one aspect of the invention, said rubber reinforcing carbon black may comprise a high structure carbon black having an Iodine adsorption value (ASTM D1510) in a range of 116 to 135 g/kg together with a dibutylphthalate (DBP) value (ASTM D2414) in a range of 125 to 140, cc/100g.

In a further aspect of the invention, said reinforcing filler may comprise a combination of silica, preferably precipitated silica, and rubber reinforcing carbon black wherein the weight ratio of said silica to said rubber reinforcing carbon black is at least 1/1, alternately at least 5/1 and further alternately in a range of about 0.1/1 to 20/1 or in a range of from about 1.5/1 to about 5/1.

In practice, said coupling agent may comprise a bis (3-trialkoxysilylalkyl) polysulfide having an average of from 2 to 4 connecting sulfur atoms in its polysulfidic bridge or an alkoxyorganomercaptosilane.

In practice, said rubber composition contains up to 20 phr, alternatively from 5 to
20 phr of cis 1,4-polyisoprene rubber having a Tg in a range of from -65°C to -70°C.

It is an important aspect of this invention that the tread rubber composition is both cis 1,4-polybutadiene rubber-rich and, also silica-rich.

Another important aspect of the invention is a requirement that at least two elastomer phases are present with spaced apart Tg's and that the combination of cis 1,4-polybutadiene rubber and functionalized SBR elastomer are in the clear majority insofar as elastomers in the tread rubber are concerned and, moreover, that the Tg of the cis 1,4-polybutadiene rubber is at least 50°C lower than the Tg of the functionalized styrene/butadiene copolymer rubber.

In practice, it is desired that at least 45, preferably at least 50, and even up to a threshold of at least 55, weight percent of the elastomers have a Tg lower than -95°C, namely the cis 1,4-polybutadiene, and at least 15 weight percent of the elastomers have a Tg of higher than -55°C, namely the functionalized SBR.

In this manner, it is considered herein that the relatively low Tg cis 1,4-polybutadiene elastomer is relatively incompatible with the said high Tg styrene/butadiene copolymer elastomers as evidenced by their individual tan delta peaks on a graphical presentation, or plot, of tan delta versus temperature of the cured rubber composition within a temperature range of -90°C to 10°C.

Accordingly, the elastomers of said tread rubber are present in at least two phases, comprising a cis 1,4 polybutadiene phase and an additional phase comprising said functionalized styrene/butadiene elastomers.

In practice, said functionalized SBR having a relatively high glass transition (Tg) value is intended to promote a wet traction for the tire tread and to also promote a relatively low rolling resistance (e.g. promote a relatively high rebound physical property) for the tread rubber composition intended for relatively heavy duty use.

Representative of amine functionalized SBR elastomers are SBR elastomers which contain amine groups which are available to react with hydroxyl groups contained on the precipitated silica) may be, for example, BR1250H™ from Nippon Zeon and T5580™ from JSR.

Representative of a combination of amine and siloxy end functionalized SBR elastomers (SBR elastomer which contains a siloxy group, with an amine group intermediate between said siloxy group and elastomer, with the siloxy group available to react with hydroxyl groups contained on the precipitated silica) may be, for example, HPR350™ from JSR and N205/Y030™ from Asahi.

Representative of a combination of siloxy functionalized SBR elastomers (SBR elastomers which contain a combination of siloxy functional groups and sulfur moiety, the siloxy groups available to react with hydrogen groups contained on the precipitated silica and the sulfur moiety available to interact with diene based elastomers in the rubber composition) is, for example, P6204M™ from Dow Chemical.

Representative of such hydroxy (hydroxyl) functionalized SBR elastomers (SBR elastomers which contain hydroxyl functional groups available to react with hydroxyl groups contained on the precipitated silica) is, for example, Tufdene 3330™ from Asahi.

Representative of such epoxy functionalized SBR elastomers (SBR elastomers which contain epoxy functional groups) is, for example, Tufdene E50™ from Asahi.

In practice, the relatively high styrene-containing HS-SBR, if used, is considered herein to be important to promote tire tread traction, hysteresis, or coefficient of friction, for the rubber composition. It is desired herein that their bound styrene content be at least 30 percent, based upon the SBR, for the tire tread traction enhancement.

In the practice of this invention, use of a quantitative amount of at least 45, and preferably at least 55, phr of the high cis 1,4-polybutadiene elastomer in the rubber composition of this invention is considered herein to be important in order to promote resistance to abrasion (e.g. promote resistance to tread wear) for the tire tread.

The cis 1,4-polyisoprene, preferably natural rubber, if used, is considered herein to be important in order to promote processability of the tire tread rubber composition with use of only a relatively minimum amount of processing oil, if any, and processing additives which are considered herein to normally adversely offset abrasion resistance.

The presence of the cis 1,4-polyisoprene natural rubber, if used, is also considered herein to be important to promote a tear resistance property for the tread rubber composition.

Use of the high structure rubber reinforcing carbon black(s) for this invention, with the characterized Iodine adsorption value range and DBP number range, is considered herein to be important in order to promote good abrasion resistance, or coefficient of friction, and higher stiffness for the tire cornering and handling, and also enhanced, or relatively high hysteresis for relatively good traction for a tire tread.

Representative of such high structure rubber reinforcing carbon blacks are, for example, N121 and N205. As hereinbefore pointed out, such representative carbon blacks have an Iodine adsorption value within a range of 110 to 145 g/kg and a DBP value in a range of 110 to 140 cc/g. Examples of reinforcing carbon blacks for elastomers, generally, together with their Iodine number values and DBP (dibutyl phthalate) absorption values, may be found in The Vanderbilt Rubber Handbook, (1990), 13th edition, Pages 416 through 419.

In the practice of this invention, use of the specific combinations of the aforesaid silica-rich, multiphase elastomer blend and coupling agent are considered herein to be important in order to optimize resistance to abrasion (resistance to tread wear) and to promote a suitable hysteresis (e.g. rolling resistance).

In practice, it is preferred that the elastomers utilized in the tread composition are exclusive of polymers and copolymers of isobutylene, including halogen modifications thereof.

As hereinbefore pointed out, the invention is based upon use of elastomers, silica and coupling agent, all of which are usually known, in what is considered herein as a novel combination as to
(A) selection of specific individual materials, namely elastomers and reinforcing fillers, and
(B) combining the selected specific materials in novel combinations in terms of individual amounts in a manner not believed to be specifically heretofore used for a tire tread.

This aspect of the invention is considered particularly important for creating a tire tread rubber composition with a combination of good abrasion properties together with good traction, or coefficient of friction, and hysteresis, properties.

The precipitated silicas are silicas such as, for example, those obtained by the acidification of a soluble silicate (e.g., sodium silicate or a co-precipitation of a silicate and an aluminate).

The BET surface area of the silica, as measured using nitrogen gas, may, for example, be in a range of 50 to 300, alternatively 120 to 200, square meters per gram.

The silica may also have a dibutylphthalate (DBP) absorption value in a range of, for example, 100 to 400, and usually 150 to 300 cc/g.

Various commercially available silicas may be considered for use in this invention such as, for example, only and without limitation, silicas commercially available from PPG Industries under the Hi-Sil trademark with designations 210 or 243; silicas available from Rhodia, with designations of Zeosil 1165MP and Zeosil 165GR; and silicas available from Degussa AG with designations VN2, VN3 and 3770GR; and from Huber as Zeopol 8745.

When silica reinforcement is used for a rubber tire tread, the silica is conventionally used with a coupling agent, or what is sometimes referred to as a reinforcing agent

Compounds capable of reacting with both the silica surface and the rubber elastomer molecule in a manner to cause the silica to have a reinforcing effect on the rubber, many of which are generally known to those skilled in such art as coupling agents, or couplers, are often used. Such coupling agents, for example, may be premixed, or prereacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents may, for example, be composed of a silane which has a constituent component, or moiety, (the silane portion) capable of reacting with the silica surface and, also, a constituent component, or moiety, capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, the silane of the coupling agent apparently forms a bond to the silica surface, possibly through hydrolysis, and the rubber reactive component of the coupling agent combines with the rubber itself.

Numerous coupling agents are taught for use in combining silica and rubber such as, for example, silane coupling agents containing a polysulfide component, or structure, such as bis-(3-alkoxysilylalkl) polysulfide which contains an average from 2 to 4 (such as for example a range of from 2 to 2.4 or a range of from 3 to 4) connecting sulfur atoms in its polysulfidic bridge such as, for example, a bis-(3-triethoxysilylpropyl) polysulfide.

A preferred coupling agent is comprised of a bis-(3-ethoxysilylpropyl) disulfide material having from 2 to 4, with an average of from 2 to 2.4, connecting sulfur atoms in the polysulfide bridge. Such disulfide-type coupling agent is particularly preferred in order to provide enhanced ease of processing, particularly mixing, the unvulcanized rubber composition.

It is readily understood by those having skill in the art that the rubber compositions of the tread would be compounded with conventional compounding ingredients including the aforesaid reinforcing fillers such as carbon black and precipitated silica, as hereinbefore defined, in combination with a silica coupling agent, as well as antidegradant(s), processing oil as hereinbefore defined, stearic acid or a zinc stearate, zinc oxide, sulfur-contributing material(s) and vulcanization accelerator(s) as hereinbefore defined.

Antidegradants are typically of the amine or phenolic type. While stearic acid is typically referred to as a rubber compounding ingredient, it may be pointed out that the ingredient itself is usually obtained and used as a mixture of organic acids primarily composed of stearic acid with at least one of oleic acid, linolenic acid and/or palmitic acid normally contained in the stearic acid as typically used. The mixture may contain minor amounts (less than about six weight percent) of myristic acid, arachidic acid and/or arachidonic acid. Such material or mixture is conventionally referred to in the rubber compounding art as stearic acid.

Where normal or typical rubber compounding amounts or ranges of amounts of such additives are used, they are not otherwise considered as a part of the invention. For example, some of the ingredients might be classified, in one aspect, as processing aids. Such processing aids may be, for example, waxes such as microcrystalline and paraffinic waxes typically used in a range of 1 to 5 phr; and resins, usually as tackifiers, such as, for example, synthetic hydrocarbon and natural resins typically used in a range of 1 to 5 phr. A curative might be classified as a combination of sulfur and sulfur cure accelerator(s) for the rubber compound (usually simply referred to as accelerator) or a sulfur donor/accelerator. In a sulfur and accelerator(s) curative, the amount of sulfur used is in a range of 0.5 to 5 phr and usually in a range of 0.5 to 3 phr; and the accelerator(s), often of the sulfenamide type, is (are) used in a range of 0.5 to 5 phr and often in a range of 1 to 2 phr. The ingredients, including the elastomers but exclusive of sulfur and accelerator curatives, are normally first mixed together in a series of at least two sequential mixing stages, although sometimes one mixing stage might be used, to a temperature in a range of 145°C to 185°C, and such mixing stages are typically referred to as non-productive mixing stages. Thereafter, the sulfur and accelerators, and possibly one or more retarders and one or more antidegradants, are mixed therewith to a temperature of 90°C to 120°C and is typically referred as a productive mix stage.

After mixing, the compounded rubber can be fabricated such as, for example, by extrusion through a suitable die to form a tire tread. The tire tread is then typically built onto a sulfur curable tire carcass and the assembly thereof cured in a suitable mold under conditions of elevated temperature and pressure by methods well-known to those having skill in such art. In such case of retreading of a tire, the tire tread might first be precured and then applied to the already cured tire carcass with a curable gum strip between the tread and carcass and the assembly then submitted to curing conditions to cure the aforesaid gum strip.

The invention may be better understood by reference to the following example in which the parts and percentages are by weight unless otherwise indicated.

### EXAMPLE I

Comparative rubber compositions were prepared which comprised cis 1,4-polybutadiene rubber and various SBR elastomer(s).

Comparative rubber compositions were prepared which comprised cis 1,4-polybutadiene rubber and functionalized SBR(s) to evaluate immiscible (incompatible) and miscible (compatible) polymer blends for promoting tire tread wet performance (such as for example, for promoting physical properties of lower rebound value at 0°C and higher tan delta value at 0°C for the rubber composition), without sacrificing physical properties such as abrasion resistance and rebound physical property.

Comparative rubber Sample A was a carbon black-rich rubber composition.

Comparative rubber Sample A comprised a partially compatible, or partially miscible, carbon black reinforced rubber blend, namely a blend of natural cis 1,4-polyisoprene rubber, cis 1,4-polybutadiene rubber and emulsion polymerization prepared SBR (E-SBR). The elastomers for rubber Sample A are considered herein as being partially miscible in a sense of a plot of tan delta versus temperature (°C) for the rubber composition illustrating a large peak which overlaps a substantially smaller peak with the larger peak resulting from presence of the natural rubber having a Tg of -65°C and the smaller peak resulting from the presence of the E-SBR (having a Tg of -15°C) and overlapping natural rubber (with its Tg of -65°C).

It is considered herein that the cis 1,4-polybutadiene rubber and E-SBR in the rubber composition of Comparative rubber Sample A are miscible with each other but not entirely miscible with the natural rubber.

The emulsion polymerization prepared styrene/butadiene rubber (E-SBR) had a bound styrene content of about 23.5 percent and a glass transition temperature (Tg) of about -52°C.

Comparative rubber Sample B comprised a compatible, or miscible, silica and carbon black reinforced rubber blend of cis 1,4-polybutadiene rubber and a solution polymerization prepared styrene/butadiene rubber (S-SBR-A) with a styrene content of about 33 percent and a vinyl 1,2-content of about 23 percent based upon the total elastomer. The elastomers are considered herein to be compatible, or miscible, in the sense of the rubber composition exhibiting a single tan delta peak for a tan delta versus temperature sweep in a temperature range of from -110°C to 20°C.

Comparative rubber Sample C was comprised of an incompatible, or immiscible, silica-carbon black reinforced rubber blend of cis 1,4-polybutadiene rubber and a high styrene emulsion polymerization prepared styrene/butadiene rubber (HS-E-SBR) with a high styrene content of 40 percent. The elastomers are considered herein to be incompatible, or immiscible, in the sense of the rubber composition exhibiting dual tan delta peaks for a tan delta versus temperature sweep between -110°C and 20°C.

Comparative rubber Sample D comprised an incompatible, or immiscible, silica-carbon black reinforced rubber blend of cis 1,4-polybutadiene rubber and a high styrene, methoxysilano-functionalized solution polymerization prepared styrene/butadiene rubber (F-HS-S-SBR), having a Tg of -34°C, with a styrene content of 40 percent and a vinyl 1,2-content of 14 percent based upon the total elastomer. The elastomers are considered herein to be incompatible, or immiscible, in the sense of the rubber composition exhibiting dual an delta peaks for a temperature sweep of tan delta versus temperature between - 110°C and 20°C.

The basic rubber composition formulation is illustrated in Table 1 and the ingredients are expressed in parts by weight per 100 parts rubber (phr) unless otherwise indicated.

The rubber compositions can be prepared by mixing the elastomers(s) without sulfur and sulfur cure accelerators in a first non-productive mixing stage (NP-1) in an internal rubber mixer for about 4 minutes to a temperature of 160°C. The rubber mixture may then mixed in a second non-productive mixing stage (NP-2) in an internal rubber mixer for 4 minutes to a temperature of 160°C without adding additional ingredients. The resulting rubber mixture may then mixed in a productive mixing stage (PR) in an internal rubber mixer with sulfur and sulfur cure accelerator(s) for 2 minutes to a temperature of 110°C. The rubber composition may then sheeted out and cooled to below 50°C between each of the non-productive mixing steps and prior to the productive mixing step.

**Table 1**

| | Comparative Samples | | Comparative Samples | |
|---|---|---|---|---|
| Material | A | B | C | D |
| ***Non-productive mixing*** | | | | |
| Natural cis 1,4-polyisoprene rubber¹ | 50 | 0 | 0 | 0 |
| Cis 1,4-polybutadiene rubber² | 25 | 52 | 55 | 55 |
| Rubber content of oil extended E-SBR rubber³ | 25 | 0 | 0 | 0 |
| Rubber content of oil extended S-SBR-A (solution S-SBR)⁴ | 0 | 48 | 0 | 0 |
| Rubber content of oil extended HS-E-SBR-B (emulsion HS-SBR)⁵ | 0 | 0 | 45 | 0 |
| Rubber content of oil extended F-HS-S-SBR-C⁶ | 0 | 0 | 0 | 45 |
| Carbon Black⁷, N205 | 60 | 35 | 35 | 35 |
| Precipitated silica⁸ | 0 | 45 | 45 | 45 |
| Silica coupler⁹ | 0 | 3.6 | 3.6 | 3.6 |
| Added rubber processing oil¹⁰ | 5 | 3 | 4 | 4 |
| Wax¹¹ | 1.5 | 1.5 | 1.5 | 1.5 |
| Stearic acid¹² | 2 | 2 | 2 | 2 |
| Zinc oxide | 3 | 3 | 3 | 3 |

| ***Productive mixing*** | | | | |
|---|---|---|---|---|
| Sulfur | 1.5 | 1.5 | 1.5 | 1.5 |
| Accelerator¹³ | 1.3 | 2.5 | 2.5 | 2.5 |
| Calculated Tg¹⁴ | -68°C | -68°C | -68°C | -68°C |

| | | | | |
|---|---|---|---|---|
| *¹Natural rubber SMR-20* *²Cis 1,4-polybutadiene elastomer, reported above on a dry weight basis, having a high cis 1,4- content of at least 95 percent and having and a Tg of about -100 °C as Budene*® *1254 from The Goodyear Tire & Rubber Company (oil extended with 25 phr of aromatic rubber processing oil per 100 parts by weight of the rubber).* *³An oil extended emulsion polymerization prepared styrene*/*butadiene copolymer elastomer (E-SBR) as PLF1712C™ from The Goodyear Tire & Rubber Company company, reported above on a dry weight basis, having a styrene content of about 23.5 percent and a Tg of about -52°C (oil extended with 37.5 parts of aromatic rubber processing oil per 100 parts by weight of the rubber).* *⁴Oil extended solution polymerization prepared styrene*/*butadiene copolymer elastomer (S-SBR-A) as SLF33H23™ from The Goodyear Tire & Rubber Co., reported above on a dry weight basis, having a styrene content of about 30 percent, a vinyl 1,2- content of about 23 percent based on the total elastomer and a Tg of about -36°C (oil extended with 37.5 parts of naphthenic rubber processing oil per 100 parts by weight of the rubber)* *⁵Oil extended high styrene emulsion polymerization prepared styrene*/*butadiene copolymer elastomer (HS-E-SBR-B), as BUNA™ SB1739 synthetic rubber from Dow Olefinverbund GmbH, reported above on a dry weight basis, having a styrene content of about 40 percent and a Tg of about -35°C (oil extended with 37.5 parts of TDAE rubber processing oil per 100 parts by weight of the rubber)* *^{s}Methoxysilano-functionalized oil extended high styrene solution polymerization prepared styrene*/*butadiene copolymer elastomer (F-HS-S-SBR-C), an SBR elastomer having methoxy silane based functional groups, as SE SLR6430 synthetic rubber from Dow Olefinverbund GmbH, reported above on a dry weight basis, having a styrene content of about 40 percent and a Tg of about -35°C (oil extended with 37.5 parts of TDAE rubber processing oil per 100 parts by weight of the rubber)* *⁷N205 (ASTM designation) carbon black having an Iodine number of about 122 m²*/*g with a DBP value of about 115 cc*/*g* *⁸Obtained as ZS 1165P™ from Rhodia* *⁹A 50*/*50 (by weight) composite of carbon black and bis-(3-triethoxysilylpropyl) poly sulfide having an average from about 2.2 to about 2.6 connecting sulfur atoms in its polysulfidic bridge from Evonic Degussa, identified as Si266S™ and reported in the Table as the composite* *¹⁰Rubber processing oil in addition to oil contained in the oil extended rubber* *¹¹A mixture of microcrystalline and paraffin waxes* *¹²A combination of fatty acids including stearic acid and palmitic acid* *¹³Accelerators as a sulfenamide and diphenylguanidine* *¹⁴A calculated Tg in a sense of a "Fox relationship" of Tg's which might be expressed as 1*/*Tg = w₁*/*Tg₁* + *w₂lTg₂, where w₁ and w₂ represent the mass fractions of the respective compounds. The significance of the calculated lower Tg is reflected better resistance to treadwear and high Tg better for wet traction.* | | | | |

The prepared rubber compositions were cured at a temperature of 160°C for 14 minutes and the resulting cured rubber samples evaluated for their physical properties (rounded numbers are reported herein) as shown in the following Table 2.

**Table 2**

| | Comparative Samples | | Comparative Samples | |
|---|---|---|---|---|
| Material | A | B | C | D |
| Natural rubber | 50 | 0 | 0 | 0 |
| Cis 1,4-Polybutadiene rubber | 25 | 52 | 55 | 55 |
| Emulsion pzn prepared SBR as E-SBR rubber | 25 | 0 | 0 | 0 |
| Solution pzn prepared SBR as S-SBR-A | 0 | 48 | 0 | 0 |
| High styrene SBR as HS-E-SBR-B | 0 | 0 | 45 | 0 |
| Functionalized SBR as F-HS-S-SBR-C | 0 | 0 | 0 | 45 |

| ***Properties*** | | | | |
|---|---|---|---|---|
| *Rheometer, 150°C* | | | | |
| Maximum torque, dNm | 3.5 | 5.1 | 3.8 | 5.4 |
| Minimum torque, dNm | 19.1 | 22.5 | 20.8 | 23.5 |
| Delta torque, dNm | 15.6 | 17.5 | 17 | 18.1 |
| T90, minutes | 6.9 | 5.9 | 5.5 | 5.5 |
| *Stress-strain* | | | | |
| Tensile strength (MPa) | 20.5 | 18.5 | 19.4 | 18.5 |
| Elongation at break (%) | 605 | 527 | 563 | 507 |
| 300% modulus, ring, (MPa) | 7.5 | 9.3 | 8.9 | 10.2 |
| *Rebound (Zwick)* | | | | |
| 0°C | 29 | 25 | 21 | 21 |
| 23°C | 36 | 36 | 32 | 35 |
| 100°C | 52 | 53 | 52 | 54 |
| *Shore A Hardness* | | | | |
| 23°C | 68 | 73 | 72 | 72 |
| 100°C | 45 | 46 | 46 | 48 |
| *Tear Strength¹, N* | | | | |
| At 95°C | 152 | 187 | 154 | 139 |
| At 23°C | 216 | 197 | 245 | 193 |
| Tan delta (0°C, 10 Hertz, 3% strain) | 0.32 | 0.36 | 0.41 | 0.41 |
| Tan delta (60°C, 10 Hertz, 3% strain) | 0.26 | 0.24 | 0.25 | 0.23 |
| Tear strength (23°C, N) | | | | |
| Abrasion rate (mg/km), Grosch², High (70N), 12° slip angle, speed = 20 km/hr, distance = 250 meters | 442 | 294 | 275 | 279 |

| | | | | |
|---|---|---|---|---|
| *¹Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force.* *²The Grosch abrasion rate run on an LAT-100 Abrader and is measured in terms of mg*/*km of rubber abraded away. The test rubber sample is placed at a slip angle under constant load (Newtons) as it traverses a given distance on a rotating abrasive disk (disk from HB Schleifmittel GmbH). Frictional forces, both lateral and circumferential, generated by the abrading sample can be measured together with the load (Newtons) using a custom tri-axial load cell. The surface temperature of the abrading wheel is monitored during testing and reported as an average temperature.* | | | | |

In practice, a Low abrasion severity test may be run, for example, at a load of 20 Newtons at a slip angle of 2 degrees and a disk speed of 20 or 40 kph (kilometers per hour) at a sample travel of 7,500 m. A Medium abrasion severity test may be run, for example, at a load of 40 Newtons at a slip angle of 6 degrees and a disk speed of 20 kph and a sample travel of 1,000 m. A High abrasion severity test may be run, for example, at a load of 70 Newtons at a slip angle of 12 degrees and a disk speed of 20 kph and a sample travel of 250 m.

It can be seen from Table 2 that the 0°C rebound values of the Comparative rubber Sample C and Comparative rubber Sample D containing the incompatible, or immiscible, elastomers are lower than the values of the Comparative rubber Sample A and Comparative rubber Sample B containing the compatible, or miscible, elastomers, which considered herein as being predictive of wet traction for a tire tread (tire tread running surface) of such rubber composition.

It can further be seen from Table 2 that the 0°C tan delta values of Comparative rubber Sample C and Comparative rubber Sample D are higher than 0°C tan delta values for Comparative rubber Sample A and Comparative rubber Sample B, which is considered herein as being predictive of wet traction for a tire tread (tire tread running surface) of such composition.

This is considered herein to be significant in a sense of promoting wet performance, namely promoting wet traction and associated shorter vehicular stopping distance for a tire having a tread of Comparative rubber Sample D because the combination of lower value of the 0°C rebound and higher value of the 0°C tan delta is considered herein as being predictive of wet traction (wet tire performance) for a tire tread of such rubber composition.

It can also be seen from Table 2 that Grosch abrasion rate of the Comparative rubber Sample C and Comparative rubber Sample D, which contained the incompatible, or immiscible, elastomers, was lower than Comparative rubber Sample A and Comparative rubber Sample B which contained the compatible, or miscible, elastomers, which considered herein as being predictive of better resistance to tread wear for a tire tread (tire tread running surface) for a tire tread of such rubber composition.

This is considered herein to be significant in a sense of predictively promoting resistance to treadwear for a tire having a tread of the rubber composition of Comparative rubber Sample D because of its indicated lower value of Grosch abrasion rate.

### EXAMPLE II

Carbon black-rich rubber compositions were prepared which were comprised of cis 1,4-polybutadiene rubber and various SBR elastomer(s) including functionalized SBR(s) to evaluate immiscible and miscible polymer blends for promoting tire tread wet performance (such as for example, for promoting physical properties of lower rebound value at 0°C and higher tan delta value at 0°C for the rubber composition), without significantly sacrificing physical properties such as abrasion resistance for a tire tread running surface and rebound (e.g. rolling resistance for a tire tread).

The rubber compositions are identified herein as Comparative rubber Samples A and E, and Comparative rubber Samples F and G.

Comparative rubber Sample A was the Comparative rubber Sample A of Example I and was therefore comprised of a partially compatible, or partially miscible, carbon black reinforced rubber blend of natural cis 1,4-polyisoprene rubber, cis 1,4-polybutadiene rubber and an emulsion polymerization prepared styrene/butadiene rubber (E-SBR) with styrene content of 23.5 percent and a glass transition temperature (Tg) of -52°C.

As in Example I, Comparative rubber Sample A, three elastomers for rubber Sample A are considered herein as being partially miscible in a sense of a plot of tan delta versus temperature (°C) illustrating a large peak which overlaps a substantially smaller peak with the larger peak resulting from presence of the natural rubber having a Tg of -65°C and the smaller peak resulting from the presence of the E-SBR (having a Tg of -12°C) and overlapping natural rubber (with its Tg of -65°C).

Comparative rubber Sample E was comprised of a compatible, or miscible, silica-carbon black reinforced rubber blend of cis 1,4-polybutadiene rubber and a solution polymerization prepared styrene/butadiene rubber (S-SBR-A) with a styrene content of about 33 percent and a vinyl 1,2-content of 23 percent based upon the total elastomer. The elastomers are considered herein to be compatible, or miscible, in the sense of exhibiting a single tan delta peak for a tan delta versus temperature sweep between -110°C and 20°C.

Comparative rubber Sample F was comprised of an incompatible, or immiscible, silica-carbon black reinforced rubber blend of cis 1,4-polybutadiene rubber and a high styrene emulsion polymerization prepared styrene/butadiene rubber (HS-E-SBR-B) with a styrene content of about 40 percent The elastomers are considered herein to be incompatible, or immiscible, in the sense of exhibiting dual tan delta peaks for a tan delta versus temperature sweep between -110°C and 20°C.

Comparative rubber Sample G was comprised of an incompatible, or immiscible, silica-carbon black reinforced rubber blend of cis 1,4-polybutadiene rubber and a high styrene, methoxysilano-functionalized emulsion polymerization prepared styrene/butadiene rubber (F-HS-E-SBR) with a styrene content of about 40 percent and a vinyl 1,2- content of about 14 percent based upon the total elastomer. The elastomers are considered herein to be incompatible, or immiscible, in the sense of exhibiting dual tan delta peaks for a tan delta versus temperature sweep between -110°C and 20°C.

The rubber Samples were prepared in the manner of Example I with the formulations shown in the following Table 3.

**Table 3**

| | Comparative Samples | | Comparative Samples | |
|---|---|---|---|---|
| Material | **A** | **E** | **F** | **G** |
| | | Miscible | Immiscible | Immiscible |
| ***Non-productive mixing*** | | | | |
| Natural cis 1,4-polyisoprene rubber¹ | 50 | 0 | 0 | 0 |
| Cis 1,4-polybutadiene rubber² | 25 | 58 | 60 | 60 |
| Rubber content of oil extended E-SBR rubber³ | 25 | 0 | 0 | 0 |
| Rubber content of oil extended S-SBR-A (solution SBR)⁴ | 0 | 42 | 0 | 0 |
| Rubber content of oil extended HS-E-SBR-B (emulsion HS-SBR)⁵ | 0 | 0 | 40 | 0 |
| Rubber content of oil extended F-HS-S-SBR-C (solution HS-SBR)⁶ | 0 | 0 | 0 | 40 |
| Carbon black⁷, N205 | 60 | 56 | 56 | 56 |
| Precipitated silica⁸ | 0 | 10 | 10 | 10 |
| Silica coupler⁹ | 0 | 2 | 2 | 2 |
| Added rubber processing oil¹⁰ | 5 | 2 | 2 | 2 |
| Wax¹¹ | 1.5 | 1.5 | 1.5 | 1.5 |
| Stearic acid¹² | 2 | 2 | 2 | 2 |
| Zinc oxide | 3 | 3 | 3 | 3 |

| ***Productive mixing*** | | | | |
|---|---|---|---|---|
| Sulfur | 1.5 | 1.5 | 1.5 | 1.5 |
| Accelerator¹³ | 1.3 | 1.1 | 1.1 | 1.1 |
| Calculated Tg¹⁴ | -68°C | -72°C | -72°C | -72°C |

| | | | | |
|---|---|---|---|---|
| *Footnotes: please see footnotes of Table 1* | | | | |

The prepared rubber compositions were cured at a temperature of 160°C for 14 minutes and the resulting cured rubber samples evaluated for their physical properties (rounded numbers are reported herein) as shown in the following Table 4.

**Table 4**

| | Comparative Samples | | Comparative Samples | |
|---|---|---|---|---|
| Material | A | E | F | G |
| Natural rubber | 50 | 0 | 0 | 0 |
| Cis 1,4-Polybutadiene rubber | 25 | 58 | 60 | 60 |
| Emulsion pzn prepared SBR as E-SBR rubber | 25 | 0 | 0 | 0 |
| Solution pzn prepared SBR as S-SBR-A | 0 | 42 | 0 | 0 |
| High styrene SBR as HS-E-SBR-B | 0 | 0 | 40 | 0 |
| Functionalized SBR as F-HS-S-SBR-C | 0 | 0 | 0 | 40 |

| ***Properties*** | | | | |
|---|---|---|---|---|
| *Rheometer, 150°C* | | | | |
| Maximum torque, dNm | 3.5 | 4.2 | 3.8 | 4.9 |
| Minimum torque, dNm | 19.1 | 16.1 | 16 | 16.9 |
| Delta torque, dNm | 15.6 | 11.9 | 12.2 | 12 |
| T90, minutes | 6.9 | 10.4 | 9.4 | 9.4 |

| *Stress-strain* | | | | |
|---|---|---|---|---|
| Tensile strength (MPa) | 20.5 | 19.2 | 18.8 | 18.4 |
| Elongation at break (%) | 605 | 676 | 643 | 616 |
| 300% modulus, ring, (MPa) | 7.5 | 5.9 | 6.3 | 6.5 |
| *Rebound (Zwick)* | | | | |
| 0°C | 29 | 30 | 25 | 24 |
| 23°C | 36 | 36 | 33 | 34 |
| 100°C | 52 | 52 | 49 | 52 |

| *Shore A Hardness* | | | | |
|---|---|---|---|---|
| 23°C | 68 | 65 | 67 | 66 |
| Tear Strength, N, 95°C | 152 | 207 | 230 | 224 |
| Tan delta (0°C, 10 Hertz, 3% strain) | 0.32 | 0.35 | 0.40 | 0.39 |
| Tan delta (60°C, 10 Hertz, 3% strain) | 0.26 | 0.25 | 0.26 | 0.24 |
| Abrasion rate (mg/km), Grosch, High (70N), 12° slip angle, speed = 20 km/hr, distance = 250 meters | 442 | 338 | 260 | 269 |

It can be seen from Table 4 that the 0°C rebound values of Comparative rubber Sample F and Comparative rubber Sample G containing the incompatible, or immiscible, elastomers are lower than the values of the Comparative rubber Sample A and Comparative rubber Sample E containing the compatible, or miscible, elastomers, considered herein as
being predictive of better wet traction for a tire tread (tire tread running surface) of such rubber composition.

It can further be seen from Table 4 that the 0°C tan delta values of Comparative rubber Sample F and Comparative rubber Sample G are higher than 0°C tan delta values for Comparative rubber Sample A and Comparative rubber Sample E considered herein as being predictive of better wet traction (and shorter stopping distance) for a tire tread (tire tread running surface) of such rubber composition.

For Comparative rubber Sample G, the combination of lower 0°C rebound value and higher 0°C tan delta value is considered herein as being predictive better wet traction (and shorter stopping distance) for a tire tread (tire tread running surface) of such rubber composition.

It can also be seen from Table 4 that Grosch abrasion rate of Comparative rubber Sample F and Comparative rubber Sample G, which contained the incompatible, or miscible, elastomers, was lower than Comparable rubber Sample A and Comparable rubber Sample E which contained the compatible, or miscible, elastomers which is considered herein as being predictive of promoting better resistance to tread wear for a tire tread (tire tread running surface) of the rubber composition of Comparative rubber Samples F and G.

### EXAMPLE III

Rubber compositions were prepared to evaluate functionalized polymers blended with cis 1,4-polybutadiene rubber which have different compatibilities, or miscibilities.

The rubber compositions are identified herein as Comparative rubber Sample H (same as Comparative rubber Sample A in the previous Example) and Comparative rubber Samples I and J and Comparative Experimental Sample K.

Comparative rubber Sample H was a carbon black reinforced rubber blend of natural rubber, cis 1,4-polybutadiene rubber and solution polymerization prepared styrene/butadiene rubber (S-SBR-D) having a styrene content of about 20 percent and a vinyl content of only about 10 percent (based upon the total copolymer rubber).

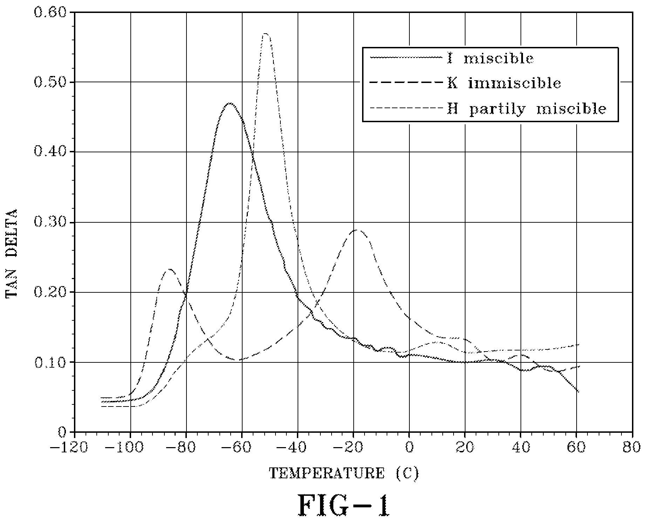

For Comparative rubber Sample H, the S-SBR, cis 1,4-polybutadiene rubber and natural rubber elastomers are considered herein as being partially compatible, or partially miscible, in a sense of a plot of tan delta versus temperature (°C) for the rubber composition illustrating a large peak which overlaps a substantially smaller peak (at about -80°C) with the larger peak (at about -50°C) resulting from presence of the natural rubber and the smaller peak resulting from the presence of the cis 1,4-polybutadiene rubber and SBR as illustrated in the accompanying drawing.

It is considered herein that the cis 1,4-polybutadiene rubber and S-SBR-D in the rubber composition are miscible with each other but not entirely miscible with the natural rubber.

Comparative rubber Sample I contained a combination of miscible cis 1,4-polybutadiene rubber and a functionalized low styrene containing solution polymerization prepared styrene/butadiene elastomer (F-LS-S-SBR-E) which had a styrene content of about 10 percent and a vinyl 1,2- content of about 40 percent based on the total elastomer. It was functionalized in a sense of containing a combination of siloxy and amine moieties which are reactive with hydroxyl groups on precipitated silica. The elastomers are considered herein to be compatible, or miscible, in the sense of exhibiting a single tan delta peak (at -65°C) for a tan delta versus temperature sweep between -110°C and 20°C as illustrated in the accompanying drawing.

Comparative Sample J contained a combination of immiscible cis 1,4-polybutadiene rubber and a siloxy end functionalized high styrene solution polymerization prepared SBR (F-HS-S-SBR-C).

Comparative Experimental rubber Sample K contained an incompatible, or immiscible, combination of cis 1,4-polybutadiene rubber and a bi-functionalized high styrene containing solution polymerization prepared styrene/butadiene elastomer (Bif-HS-S-SBR) which had a styrene content of about 45 percent and a vinyl 1,2- content of 9 percent based on the total elastomer. It was bi-functionalized in a sense of containing both amine and siloxy functionalities. The elastomers are considered herein to be incompatible, or immiscible, in the sense of the rubber composition exhibiting dual tan delta peaks (at -85°C and -20°C, respectively) for a tan delta versus temperature sweep between -110°C and 20°C as illustrated in the accompanying drawing.

The rubber Samples were prepared in the manner of Example I with the formulations shown in the following Table 5.

**Table 5**

| | Comparative Sample | Comparative Sample | | Experimental Sample |
|---|---|---|---|---|
| Material | **H** | **I** | **J** | **K** |
| | | Miscible | Immiscible | Immiscible |
| ***Non-productive mixing*** | | | | |
| Natural cis 1,4-polyisoprene rubber | 45 | 0 | 0 | 0 |
| Cis 1,4-polybutadiene rubber | 30 | 54 | 70 | 70 |
| S-SBR-D rubber¹ | 25 | 0 | 0 | 0 |
| F-LS-S-SBR-E rubber² | 0 | 46 | 0 | 0 |
| F-HS-S-SBR-C rubber³ | 0 | 0 | 30 | 0 |
| BiF-HS-S-SBR⁴ | 0 | 0 | 0 | 30 |
| Carbon black⁵, N121 | 60 | 35 | 35 | 35 |
| Precipitated silica | 0 | 32 | 32 | 32 |
| Silica coupler | 0 | 2.6 | 2.6 | 2.6 |
| Added rubber processing oil | 1.5 | 1.5 | 1.5 | 1.5 |
| Wax | 1.5 | 1.5 | 1.5 | 1.5 |
| Stearic acid | 3 | 2 | 2 | 2 |
| Zinc oxide | 3 | 3 | 3 | 3 |

| ***Productive mixing*** | | | | |
|---|---|---|---|---|
| Sulfur | 1.5 | 1.8 | 1.8 | 1.8 |
| Accelerator | 0.8 | 2.5 | 2.5 | 2.5 |
| Calculated Tg | -79°C | -79°C | -79°C | -79°C |

| | | | | |
|---|---|---|---|---|
| *¹Solution polymerization prepared styrene*/*butadiene rubber (S-SBR-D) from The Goodyear Tire & Rubber Company having a styrene content of about 20 percent, a vinyl 1,2-content of about 10 percent based on the total elastomer and a Tg of about* -*78 °C* *²Functionalized (siloxy end functionalized) low styrene containing solution polymerization prepared styrene*/*butadiene elastomer (F-LS-S-SBR-E) as HPR340™ from JSR having a styrene content of about 10 percent, a vinyl 1,2-content of about 40 percent based on the total elastomer and a Tg of about 61 °C* *³Functionalized (siloxy end functionalized) solution polymerization prepared high styrene styrenelbutadiene (F-HS-S-S8R-C) referenced in footnote No. 6 in Example I* *⁴Bifunctionalized silane*/*thiol functionalized high styrene solution polymerization prepared styrenelbutadiene rubber containing about 45 percent styrene (BiF-HS-S-SBR-F) as a developmental functionalized SBR obtained from Dow Olefinverbund GmbH which is of the type of silane*/*thiol functionalized SBR described in* WO-A- 2007/047943. | | | | |

The prepared rubber compositions were cured at a temperature of 160°C for 14 minutes and the resulting cured rubber samples evaluated for their physical properties (rounded numbers are reported herein) as shown in the following Table 6.

**Table 6**

| | Comparative Sample | Comparative Sample | | Experimental sample |
|---|---|---|---|---|
| Material | **H** | **I** | **J** | **K** |
| | | Miscible | Immiscible | Immiscible |
| Natural rubber | 45 | 0 | 0 | 0 |
| Cis 1,4-Polybutadiene rubber | 30 | 54 | 70 | 70 |
| S-SBR-D rubber | 25 | 0 | 0 | 0 |
| BiF-LS-S-SBR-E rubber | 0 | 46 | 0 | 0 |
| BiF-LS-S-SBR-F rubber | 0 | 0 | 0 | 0 |
| F-HS-SBR-C rubber | 0 | 0 | 30 | 0 |
| BiF-HS-S-SBR-G rubber | 0 | 0 | 0 | 30 |

| ***Properties*** | | | | |
|---|---|---|---|---|
| *Rheometer*, *150°C* | | | | |
| Maximum torque, dNm | 3.6 | 5.3 | 4.9 | 4.0 |
| Minimum torque, dNm | 19.2 | 26.6 | 25.3 | 25.9 |
| Delta torque, dNm | 15.5 | 21.4 | 20.4 | 21.9 |
| T90, minutes | 16.6 | 6.5 | 6.5 | 6.5 |

| *Stress-strain* | | | | |
|---|---|---|---|---|
| Tensile strength (MPa) | 21.7 | 17.6 | 17.2 | 17.6 |
| Elongation at break (%) | 520 | 384 | 417 | 412 |
| 300% modulus (MPa) | 10.9 | 14.1 | 12.3 | 13.1 |
| Rebound (Zwick) | | | | |
| 0°C | 40 | 47 | 34 | 28 |
| 23°C | 46 | 53 | 44 | 40 |
| 100°C | 60 | 63 | 61 | 59 |

| *Shore A Hardness* | | | | |
|---|---|---|---|---|
| 23°C | 68 | 70 | 71 | 73 |
| Tear strength, N, 95°C | 97 | 84 | 129 | 116 |
| Tan delta (0°C, 10 Hertz, 3% strain) | 0.12 | 0.11 | 0.14 | 0.16 |
| Tan delta (60°C, 10 Hertz, 3% strain) | 0.12 | 0.06 | 0.11 | 0.09 |
| Abrasion rate (mg/km) Grosch², high (70N),12° slip angle, speed = 20 km/hr, distance = 250 meters | 320 | 190 | 177 | 159 |
| Abrasion rate (mg/km), Grosch², ultra high (70N), 16° slip angle, speed = 20 km/hr, distance = 500 meters | 584 | 315 | 310 | 269 |

It can be seen from Table 6 that the 0°C rebound values of Comparative rubber Sample and Comparative Experimental rubber Sample K containing the incompatible, or immiscible, elastomers are lower than the values of the Comparative rubber Sample H and comparative rubber Sample I containing the compatible, or miscible, elastomers, considered herein as being predictive of better wet traction for a tire tread (tire tread running surface) of such rubber composition.

It can further be seen from Table 6 that the 0°C tan delta values of Comparative rubber Sample and Comparative Experimental rubber Sample K are higher than 0°C tan delta values for Comparative rubber Sample H and Comparative rubber Sample I which is considered herein as being predictive of better wet traction (and shorter stopping distance) for a tire tread (tire tread running surface) of such rubber composition.

For Comparative Experimental rubber Sample K, the combination of lower 0°C rebound value and higher 0°C tan delta value is considered herein as being predictive better wet traction (and shorter stopping distance) for a tire tread (tire tread running surface) of such rubber composition.

It can also be seen from Table 6 that Grosch abrasion rate of Comparative rubber Sample and Comparative Experimental rubber Sample K, which contained the incompatible, or immiscible, elastomers, was lower than Comparative rubber Sample H and Comparative rubber Sample I (which contained the compatible, or miscible, elastomers) which is considered herein as being predictive of promoting better resistance to tread wear for a tire tread (tire tread running surface) of the rubber composition of Comparative rubber Sample J and Comparative Experimental rubber Sample K.

### The Drawing

A graphical plot of tan delta versus temperature is provided to further understand this invention.

### In the Drawing

The graphical plot of tan delta versus temperature curve within a broad temperature range of -100°C to 10°C is presented for:
(A) rubber miscible rubber Comparative rubber composition I;
(B) rubber immiscible rubber Experimental rubber Sample K; and
(C) rubber partly miscible Comparative rubber Sample H.

In the drawing it can readily be seen that rubber Comparative rubber Sample I exhibits one tan delta peak (about -65°C) to indicate the miscibility of the cis 1,4-polybutadiene rubber and the lower styrene-containing functionalized SBR rubber with a siloxy group.

In the drawing it can readily be seen that Experimental rubber Sample K exhibits two distinct tan delta peaks (about -85°C and about -20°C) to indicate the immiscibility of the cis 1,4-polybutadiene rubber and the bi-functional high styrene solution polymerization prepared styrene/butadiene rubber (BiF-HS-S-SBR).

In the drawing it can readily be seen that rubber Comparative rubber Sample H exhibits one distinct tan delta peak (about -50°C) which overlaps and partially hides a small second tan delta peak at about -80°C to indicate the partly miscibility of the combination of cis 1,4-polyisoprene rubber, cis 1,4-polybutadiene rubber and solution polymerization prepared styrene/butadiene rubber (S-SBR-D).

The tan delta values can be determined by dynamic mechanical testing of the cured compound by procedure well known to those skilled in such art.

The tan delta curve for rubber Comparative Experimental rubber Sample K with a first tan delta peak at a lower temperature (e.g. -85°C) contributed by the cis 1,4-polybutadiene rubber is predictive of resistance to abrasion (e.g. improved treadwear resistance for a tire) and the second tan delta peak at the higher temperature (e.g. -20°C) contributed by the high styrene-containing functional SBR rubber, containing the siloxy moiety is predictive of higher hysteresis at temperatures in a range of about -30 to about 0°C (i.e. predictive of higher tire tread traction), all of which is predictive of a better balance of such abrasion resistance and traction properties, particularly for a tire tread, than a cured rubber composition exhibiting only a single tan delta peak of about -65°C such as for rubber Sample I.

The tan delta curves for rubber Comparative Sample H with a first, minor, overlapped tan delta peak at about -80°C contributed by the cis 1,4-polylbutadiene rubber with the H-SBR-D rubber is indicative of wear resistance and the second, major, tan delta peak at about -20°C contributed by the cis 1,4-polyisoprene rubber is indicative of tear resistance, all for a better balance of wear and tear resistance properties, particularly for a tire tread, than a cured rubber composition exhibiting a single tan delta peak of about -65°C for Comparative rubber Sample I.

## Claims

1. A pneumatic rubber tire having a circumferential tread wherein the tread is of a rubber composition comprising, based on parts per 100 parts by weight of the tread rubber (phr),
(A) conjugated diene-based elastomers comprising:
(1) 45 to 85 phr of cis 1,4-polybutadiene rubber having a Tg within a range of from -95°C to -105°C; and
(2) 15 to 55 phr of at least one elastomeric functionalized styrene/butadiene copolymer rubber (SBR) having a Tg in a range of from-20°C to -40°C;
wherein the Tg's of the cis 1,4-polybutadiene rubber and of the functionalized SBR are spaced apart by at least 50°C;
wherein the functionalized SBR has a bound styrene content in a range of from 30 to 50 percent;
and wherein the functionalized SBR contains functional group(s) comprising silane/thiol functional group(s);
(B) 40 to 110 phr of filler reinforcement comprising:
(1) silica which contains hydroxyl groups on its surface; or
(2) a combination of silica having hydroxyl groups on its surface and carbon black; and
(C) a coupling agent having a moiety reactive with hydroxyl groups contained on the surface of the silica and another moiety interactive with at least one of said conjugated diene-based elastomers;
wherein the rubber composition is exclusive of elastomers having a Tg within a range of from -40°C to -95°C except that the rubber composition contains up to 20 phr of cis 1,4-polyisoprene rubber having a Tg in a range of from -65°C to -70°C.

2. The tire of claim 1 wherein the carbon black comprises a high structure carbon black having an Iodine adsorption value in a range of from 116 to 135 g/kg together with a DBP value in a range of from 125 to 140, cc/100g.

3. The tire of at least one of the previous claims wherein the filler reinforcement comprisses a combination of silica, preferably precipitated silica, and carbon black wherein the weight ratio of silica to carbon black is at least 1/1.

4. The tire of at least one of the previous claims wherein the coupling agent comprises a bis (3-trialkoxysilylalkyl) polysulfide having an average of from 2 to 4 connecting sulfur atoms in its polysulfidic bridge or comprises an alkoxyorganomercaptosilane.

5. The tire of claim 1 wherein the rubber composition contains from 5 phr to 20 phr of cis 1,4-polyisoprene rubber having a Tg in a range of from -65°C to -70°C.

6. The tire of at least one of the previous claims wherein the cis 1,4-polybutadiene rubber and the functionalized SBR elastomer are in the majority insofar as elastomers in the rubber tread are concerned and wherein the Tg of the cis 1,4-polybutadiene rubber is at least 50°C lower than the Tg of the functionalized styrene/butadiene copolymer rubber.

7. The tire of at least one of the previous claims wherein at least 45 weight percent of the elastomers is cis 1,4-polybutadiene having a Tg lower than -95°C and at least 15 weight percent of the elastomers is the functionalized SBR having a Tg of higher than -55°C, wherein the lower Tg cis 1,4-polybutadiene elastomer is relatively incompatible with the higher Tg functionalized SBR, and wherein the elastomers of the rubber composition are present in at least two phases comprising the cis 1,4 polybutadiene phase and the functionalized SBR phase.

## Patentansprüche

1. Gummi-Luftreifen mit einer umfangsgerichteten Lauffläche, wobei die Lauffläche aus einer Kautschukzusammensetzung besteht, umfassend, auf Basis von Teilen je 100 Gewichtsteile des Laufflächenkautschuks (phr),
(A) Elastomere auf Basis konjugierten Diens, umfassend:
(1) 45 bis 85 phr cis-1,4-Polybutadienkautschuk mit einer Glasübergangstemperatur im Bereich von -95°C bis -105°C; und
(2) 15 bis 55 phr mindestens eines elastomeren funktionalisierten Styrol-Butadien-Copolymerkautschuks (SBR) mit einer Glasübergangstemperatur im Bereich von -20°C bis -40°C;
wobei die Glasübergangstemperaturen des cis-1,4-Polybutadienkautschuks und des funktionalisierten SBR um mindestens 50°C auseinander liegen;
wobei das funktionalisierte SBR einen Gehalt an gebundenem Styrol im Bereich von 30 bis 50 Prozent aufweist;
und wobei das funktionalisierte SBR eine bzw. mehrere Funktionsgruppe(n) enthält, die eine bzw. mehrere Silan-Thiol-Funktionsgruppe(n) umfassen;
(B) 40 bis 110 phr Füllstoffverstärkung, umfassend:
(1) Silika, das Hydroxylgruppen an seiner Oberfläche enthält; oder
(2) eine Kombination von Silika, das Hydroxylgruppen an seiner Oberfläche enthält, und Carbon Black; und
(C) einen Haftvermittler mit einem Anteil, der mit an der Oberfläche des Silikas enthaltenen Hydroxylgruppen reaktiv ist, und einem anderen Anteil, der mit mindestens einem der Elastomere auf Basis konjugierten Diens in Wechselwirkung tritt;
wobei die Kautschukzusammensetzung unter Ausschluss von Elastomeren ist, die eine Glasübergangstemperatur im Bereich von -40°C bis -95°C aufweisen, außer dass die Kautschukzusammensetzung bis zu 20 phr cis-1,4-Polyisoprenkautschuk mit einer Glasübergangstemperatur im Bereich von -65°C bis -70°C enthält.

2. Reifen nach Anspruch 1, wobei das Carbon Black ein stark strukturiertes Carbon Black mit einem lodabsorptionswert im Bereich von 116 bis 135 g/kg zusammen mit einem DBP-Wert im Bereich von 125 bis 140 cm³/100g umfasst.

3. Reifen nach mindestens einem der vorhergehenden Ansprüche, wobei die Füllstoffverstärkung eine Kombination von Silika, bevorzugt ausgefälltem Silika, und Carbon Black umfasst, wobei das Gewichtsverhältnis von Silika zu Carbon Black mindestens 1:1 beträgt.

4. Reifen nach mindestens einem der vorhergehenden Ansprüche, wobei der Haftvermittler ein bis(3-Trialkoxysilylalkyl)polysulfid mit einem Durchschnitt von 2 bis 4 verbindenden Schwefelatomen in seiner Polysulfidbrücke umfasst oder ein Alkoxyorganomercaptosilan umfasst.

5. Reifen nach Anspruch 1, wobei die Kautschukzusammensetzung 5 phr bis 20 phr cis-1,4-Polyisoprenkautschuk mit einer Glasübergangstemperatur im Bereich von -65°C bis -70°C enthält.

6. Reifen nach mindestens einem der vorhergehenden Ansprüche, wobei der cis-1,4-Polybutadienkautschuk und das funktionalisierte SBR-Elastomer in der Mehrzahl sind, soweit Elastomere in der Gummilauffläche betroffen sind, und wobei die Glasübergangstemperatur des cis-1,4-Polybutadienkautschuks mindestens 50°C niedriger als die Glasübergangstemperatur des funktionalisierten Styrol-Butadien-Copolymerkautschuks ist.

7. Reifen nach mindestens einem der vorhergehenden Ansprüche, wobei mindestens 45 Gewichtsprozent der Elastomere cis-1,4-Polybutadien mit einer Glasübergangstemperatur niedriger als -95°C ist und mindestens 15 Gewichtsprozent der Elastomere das funktionalisierte SBR mit einer Glasübergangstemperatur höher als -55°C ist, wobei das cis-1,4-Polybutadienelastomer mit niedrigerer Glasübergangstemperatur relativ inkompatibel mit dem funktionalisierten SBR mit höherer Glasübergangstemperatur ist, und wobei die Elastomere der Kautschukzusammensetzung in mindestens zwei Phasen vorhanden sind, umfassend die cis-1,4-Polybutadien-Phase und die funktionalisiertes SBR-Phase.

## Revendications

1. Bandage pneumatique en caoutchouc possédant une bande de roulement circonférentielle, la bande de roulement possédant une composition de caoutchouc comprenant, sur base de parties par 100 parties en poids du caoutchouc de la bande de roulement (phr) :
(A) des élastomères à base de diènes conjugués comprenant :
(1) de 45 à 85 phr de caoutchouc de 1,4-cis-polybutadiène dont la valeur Tg se situe dans la plage de -95 °C à -105°C;
(2) de 15 à 55 phr d'au moins un caoutchouc élastomère de copolymère de styrène/butadiène (SBR) fonctionnalisé dont la valeur Tg se situe dans la plage de -20 °C à -40 °C ;
dans lequel les valeurs Tg du caoutchouc de 1,4-cis-polybutadiène et du SBR fonctionnalisé sont espacées l'une de l'autre à raison d'au moins 50 °C ;
dans lequel le SBR fonctionnalisé possède une teneur en styrène lié dans la plage de 30 à 50 % ;
et dans lequel le SBR fonctionnalisé contient des groupes fonctionnels comprenant des groupes fonctionnels de type silane/thiol ;
(B) de 40 à 110 phr d'une matière de charge faisant office de renforcement, comprenant ;
(1) de la silice qui contient des groupes hydroxyle sur sa surface ; ou
(2) une combinaison de silice possédant des groupes hydroxyle sur sa surface et de noir de carbone ; et
(C) un agent de couplage possédant une fraction apte à réagir avec les groupes hydroxyle contenus sur la surface de la silice et une autre fraction qui entre en interaction avec au moins un desdits élastomères à base de diènes conjugués ;
dans lequel la composition de caoutchouc ne contient pas des élastomères dont la valeur Tg se situe dans la plage de -40 °C à - 95 °C, avec cette exception que la composition de caoutchouc contient jusqu'à 20 phr de caoutchouc de 1,4-cis-polyisoprène dont la valeur Tg se situe dans la plage de -65 °C à -70 °C.

2. Bandage pneumatique selon la revendication 1, dans lequel le noir de carbone comprend un noir de carbone de haute structure possédant une valeur d'adsorption de l'iode dans la plage de 116 à 135 g/kg conjointement avec une valeur DBP dans la plage de 125 à 140 cm³/100 g.

3. Bandage pneumatique selon au moins une des revendications précédentes, dans lequel la matière de charge faisant office de renforcement comprend une combinaison de silice, de préférence de silice précipitée, et de noir de carbone, le rapport pondéral de la silice au noir de carbone s'élevant à au moins 1/1.

4. Bandage pneumatique selon au moins une des revendications précédentes, dans lequel l'agent de couplage comprend un bis (3-trialcoxysilylalkyl) polysulfure possédant en moyenne de 2 à 4 atomes de soufre de liaison dans son pont polysulfure ou comprend un alcoxyorganomercaptosilane.

5. Bandage pneumatique selon la revendication 1, dans lequel la composition de caoutchouc contient de 5 phr à 20 phr du caoutchouc de 1,4-cis-polyisoprène dont la valeur Tg se situe dans la plage de -65 °C à 70 °C.

6. Bandage pneumatique selon au moins une des revendications précédentes, dans lequel le caoutchouc de 1,4-cis-polyisoprène et l'élastomère SBR fonctionnalisé sont en majorité, en ce qui concerne les élastomères dans la bande de roulement en caoutchouc, et dans lequel la valeur Tg du caoutchouc de 1,4-cis-polybutadiène est inférieure à concurrence d'au moins 50 °C à la valeur Tg du caoutchouc fonctionnalisé de copolymères de styrène/butadiène.

7. Bandage pneumatique selon au moins une des revendications précédentes, dans lequel au moins 45 % en poids des élastomères représentent du 1,4-cis-polybutadiène dont la valeur Tg est inférieure à -95 °C et au moins 15 % en poids d'élastomères représentent le SBR fonctionnalisé dont la valeur Tg est supérieure à -55 °C, dans lequel l'élastomère de 1,4-cis-polybutadiène de valeur Tg inférieure est relativement incompatible avec le SBR fonctionnalisé de valeur Tg supérieure, et dans lequel les élastomères de la composition de caoutchouc sont présents dans au moins deux phases comprenant la phase de 1,4-cis-polybutadiène et la phase de SBR fonctionnalisé.
